# EUROPEAN PATENT APPLICATION

(11) **EP 4 296 122 A1**
(43) Date of publication of application: **27.12.2023**
(21) Application number: 21926142.7
(22) Date of filing: 20.02.2021
(51) Int. Cl.: B60R 13/04

(54) **ROOF DECORATION STRUCTURE, CAR ROOF STRUCTURE, AND VEHICLE USING SAME**

(71) Applicant: Zhejiang Smart Intelligence Technology Co., Ltd., Ningbo, Zhejiang 315336 (CN)
(72) Inventor: KE, Chaodong, Hangzhou Bay New District Ningbo, Zhejiang 315336 (CN); FANG, Mei, Hangzhou Bay New District Ningbo, Zhejiang 315336 (CN)
(74) Representative: Zaboliene, Reda
(86) International application number: PCT/CN2021/077098
(87) International publication number: WO 2022/174424

(57) **Abstract**

A roof decoration structure, a car roof structure, and a vehicle using same. The roof decoration structure comprises a housing (1) and a connection member (2). The housing (1) is provided at an outer side of a car roof (3), the housing (1) is connected to the car roof (3) by means of the connection member (2), and the housing (1) comprises a first end portion; a front windshield mounting region (5) is formed by the first end portion and the car roof (3); and one end of the front windshield (4) is provided in the front windshield mounting region (5). The roof decoration structure is used for a vehicle, and has the advantage of improving the field of view of a driver.

## Description

### TECHNICAL FIELD

The present invention relates to the technical field of vehicles, and in particular to a roof decoration structure, a car roof structure, and a vehicle using the same.

### BACKGROUND

In daily life, as people's pace of life accelerates, people usually choose vehicles as the means of transportation for travel. As the number of vehicles increases, the number of traffic accidents increases correspondingly. One of the reasons for traffic accidents is that a driver's field of view is obstructed, for example, a black edge of a front windshield affects the driver's field of view.

In the existing automobile structure, a front windshield of an automobile is located within a frame formed by a roof, A-pillars of a vehicle body, and a front cover. Among them, the front windshield is directly fixedly connected to the roof, it can be known that a position of an upper boundary of the front windshield directly determines a size of a driver's upper field of view.

However, in the prior art, a periphery of front windshield glass needs to increase a glass black edge area with a width of at least 50-60mm. This part of the structure is opaque, not only to provide a function of making the glass be uniformly heated, but also to provide a function of covering internal structures. It simultaneously covers a glass adhesive area, a vehicle body sheet metal structure, and interior edge frame, thereby ensuring aesthetic effect of appearance of a vehicle; however, the presence of glass black edges in the above structure reduces a driver's field of view.

### SUMMARY OF THE DISCLOSURE

The present invention aims to solve the technical problem of a small field of view in the prior art.

In order to solve the above technical problem, in one aspect, the present application discloses a roof decoration structure comprising a housing and a connection member; wherein the housing is provided at an outer side of a car roof, and the housing is connected to the car roof through the connection member; the housing comprises a first end portion, the first end portion and the car roof form a front windshield mounting region; and one end of the front windshield is provided in the front windshield mounting region.

Optionally, the front windshield comprises a first side surface and a second side surface that are opposite; the first side surface is connected with the first end portion; and the second side surface is connected with the car roof.

Optionally, the first side surface is connected to the first end portion through bonding of glass glue; the first end portion is provided with a first glue stopping member.

Optionally, the second side surface is connected to the car roof through bonding of glass glue; the car roof is provided with a second glue stopping member.

Optionally, the housing comprises a second end portion that is opposite to the first end portion; the second end portion is connected to the car roof.

Optionally, a sealing member is provided at a connection position between the second end portion and the car roof.

Optionally, the connection member comprises a positioning pin; the car roof is provided with a positioning hole corresponding to the positioning pin.

Optionally, the connection member comprises a snap-fit member; the car roof is provided with a snap-fit hole corresponding to the snap-fit member.

Optionally, the housing comprises an outer casing and an inner casing connected to each other; the inner casing is provided at an outer side of the car roof; the outer casing is provided at an outer side of the inner casing, and the outer casing comprises the first end portion.

In another aspect, the present application further discloses a car roof structure comprising a car roof and the above roof decoration structure.

Optionally, the car roof comprises a first plate body and a second plate body connected to each other; the first plate body and the second plate body have preset heights; and the housing is located at an outer side of the first plate body.

In another aspect, the present application further discloses a vehicle comprising the above car roof structure.

By using the above technical solutions, the roof decoration structure provided by the present application has the following advantage effect: in one aspect, the present application discloses a roof decoration structure comprising a housing and a connection member; wherein the housing is provided at an outer side of a car roof, and the housing is connected to the car roof through the connection member; the housing comprises a first end portion, the first end portion and the car roof form a front windshield mounting region; and one end of the front windshield is provided in the front windshield mounting region. In other words, the roof decoration structure provided by the present application and the car roof can form the mounting region for fixing the windshield, such that an edge of the windshield can be directly provided in the front windshield mounting region, resulting in that the edge of the front windshield reduces a black edge that is required to shield a connection part with the car roof. That is, the black edge of the front windshield only needs to be used to shield a part of a driver's sight line that sees an interior panel. Therefore, the roof decoration structure provided by the present application has advantage of lowering a black edge of a front windshield and thereby improve a driver's field of view.

### BRIEF DESCRIPTION OF THE DRAWINGS

In order to explain technical solutions of embodiments of the present application more clearly, drawings required to be used in description of the embodiments will be briefly introduced below. It is obvious that the drawings in the following description are only some embodiments of the present application. For those skilled in the art, other drawings can be further obtained according to these drawings on the premise of paying no creative work.
FIG. 1 is a structural schematic view of a roof decoration structure in an optional embodiment of the present application.
FIG. 2 is a structural schematic view of an automobile in the prior art of the present application.
FIG. 3 is a structural schematic view of an optional housing of the present application.
FIG. 4 is a structural schematic view of a roof decoration structure in another optional embodiment of the present application.
FIG. 5 is a view of comparing a windshield and a roof mounting region in the prior art with a windshield and a roof mounting region in the present application.

The following is supplementary explanation of the accompanying drawings: 1-housing; 101-outer casing; 102-inner casing; 103-fixing base; 2-connection member; 201-positioning pin; 202-snap-fit member; 3-car roof; 301-first plate body; 302-second plate body; 4-front windshield; 5-front windshield mounting region; 6-A-pillar; 7-prior art windshield; 8-prior art car roof; 801-prior art car roof glass connecting region; 9-sealing member; 10-positioning hole; 11-snap-fit hole; 12-glass glue; 13-first glue stopping member; 14-second glue stopping member; 15-sealing foam; 16-decorative ceiling; 17-prior art car roof and windshield's mounting region structure; 18-prior art ceiling.

### DETAILED DESCRIPTION

The technical solutions in the embodiments of the present application will be described clearly and completely below in combination with the drawings in the embodiments of the present application. Obviously, the described embodiments are merely some embodiments of the present application, rather than all embodiments. Based on the embodiments of the present application, any other embodiment obtained by one of ordinary skill in the art on the premise of paying no creative work should belong to the protection scope of the present application.

"An/one embodiment" or "embodiment" herein referred to means a specific feature, structure or feature that can be included in at least one implementation of the present application. In the description of the present application, it should be understood that orientations or position relationships indicated by the terms "up", "down", "top", "bottom", and so on are based on orientations or position relationships shown in the attached drawings, which are only intended to facilitate describing the present application and simplifying the description, rather than indicating or implying that a device or element referred to must have a specific orientation, or be constructed and operated in a specific orientation, and thus should not be understood as any limit to the present application. In addition, the terms "first" and "second" are only used for describing purposes, and should not be understood as indicating or implying relative importance or implicitly indicating the number of indicated technical features. Therefore, the features defined as "first" and "second" can explicitly or implicitly include one or more such features. Moreover, the terms "first", "second" and the like are used to distinguish similar objects, and need not be used to describe a specific sequence or order. It should be understood that data used in this way can be interchanged in appropriate cases, so that the embodiments of the present application described herein can be implemented in order other than those illustrated or described herein.

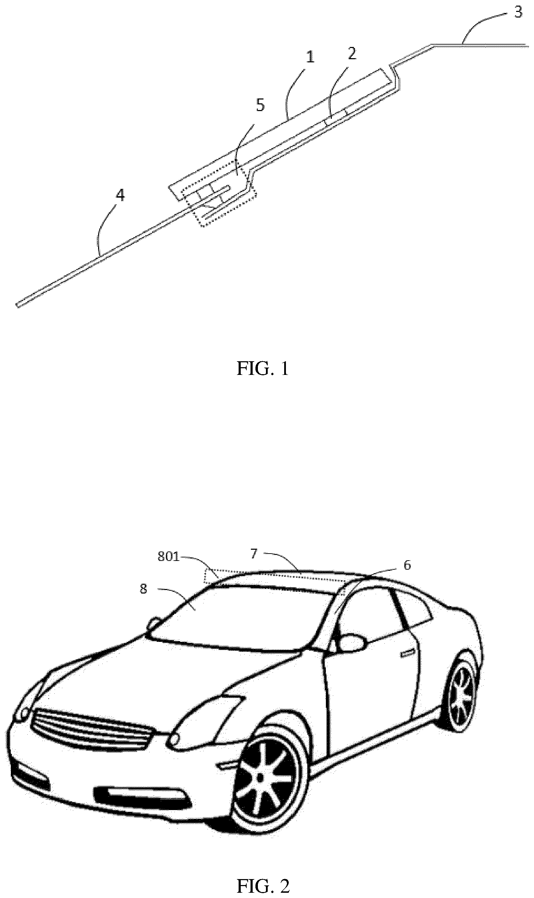

As shown in FIG. 1, FIG. 1 is a structural schematic view of a roof decoration structure in an optional embodiment of the present application. In one aspect, the present application discloses a roof decoration structure, which includes a housing 1 and a connection member 2; the housing 1 is provided at an outer side of a car roof 3, and the housing 1 is connected to the car roof 3 through the connection member 2; the housing 1 includes a first end portion, the first end portion and the car roof 3 form a front windshield mounting region 5; one end of the front windshield 4 is provided in the front windshield mounting region 5, such that a width of a black edge of the front windshield 4 is significantly reduced, and thus a driver's field of view is improved.

In the prior art, as shown in FIG. 2, FIG. 2 is a structural schematic view of an automobile in the prior art. In order to ensure the need of a driver's field of view, there are also ways to optimize the field of view by expanding an upper boundary of the prior art front windshield 4. Nevertheless, when the prior art front windshield 4 is expanded, it will compress the area and size of the prior art car roof 8, that is, will heighten a lower boundary of the prior art car roof 8, and a junction point between the A-pillar 6 and the prior art car roof 8 will move upwards. However, this method will cause the external shape of the whole automobile to generate significant changes, and increase manufacturing cost and design cost of the automobile. Moreover, in the whole automobile, when the A-pillar 6 is defined as not being a vehicle body color and the car roof 3 is designed as being suspended, the position of the junction point between the prior art car roof 8 and the A-pillar 6 determines the height of the lower boundary of prior art car roof 8. When the lower boundary of the prior art car roof 8 moves back, that is, its width narrows, and on the premise that the height of the whole automobile remains unchanged, a distance between the prior art car roof 8 and the top of the prior art front windshield 4 reduces, that is, the Z-direction space reduces, and thus the structural strength is weakened.

Of course, in the prior art, there are also ways to improve the field of view by optimizing the width of the black edge. That is, reducing the width of the glass black edge is equivalent to increasing an area of a transparent region on the premise of keeping the outer boundary of the front windshield unchanged. However, due to restrictions of various factors such as structures of its surrounding components, process, and assembly conditions, the optimization space is limited, and the optimization effect on the driving field of view is not significant. Moreover, existing manufacturers have already basically compressed this part of the structure to its limit when performing scheme design. Therefore, based on this direction, without significant improvement in the existing production process, the optimization space for the upper field of view is very limited, and improving the production process standards will also lead to increase in production cost.

From FIG. 2, it can be seen that the roof decoration structure provided by the present application is located at the prior art car roof glass connecting region 8, such that the front windshield 4 is inserted between the outer casing 101 and the car roof 3, a range of the driver's field of view is improved while ensuring that the overall shape of the automobile remains unchanged.

In an optional embodiment, the front windshield 4 includes a first side surface and a second side surface that are opposite; the first side surface is connected with the first end portion; and the second side surface is connected with the car roof 3. That is, the front windshield 4 is inserted in the front windshield mounting region 5, the first side surface is an outer side, and the second side surface is an inner side, i.e., a side surface located at a side of the interior of the automobile. In this way, a connecting part of the front windshield 4 with the car roof 3 and the roof decoration structure is hidden in the region of the car roof 3, a black edge of the front windshield 4 no longer needs to include a black edge region covering the connecting part of the front windshield 4 with the car roof 3, such that an area of a transparent region of the front windshield 4 is increased, and the driver's field of view is improved. Moreover, this structure does not need to reduce the area of the car roof 3, thus also ensures the overall shape and strength of the vehicle, with advantages of low manufacturing cost and a wide applicable range.

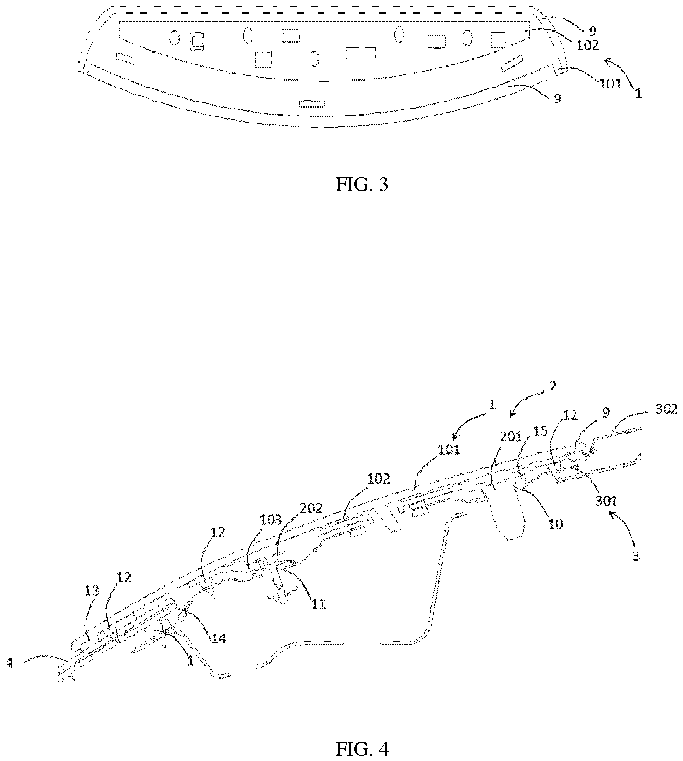

In an optional embodiment, as shown in FIG. 3, FIG. 3 is a structural schematic view of an optional housing of the present application. The housing 1 includes an outer casing 101 and an inner casing 102 connected to each other; the inner casing 102 is provided at an outer side of the car roof 3; the outer casing 101 is provided at an outer side of the inner casing 102, and the outer casing comprises the first end portion. By matching between the inner casing 102 and the outer casing 101, the inner casing 102 is enabled to hide the connection part between the two and a reinforcing structure on the housing 1 in the area between the two, at the same time of improving aesthetics, strength of the overall structure is improved.

Optionally, according to requirements, the above connection member 2 can be provided on the inner casing 102, and the first side surface of the front windshield 4 can also be connected to the inner casing 102.

In an optional embodiment, as shown in FIG. 4, FIG. 4 is a structural schematic view of a roof decoration structure in another optional embodiment of the present application. The first side surface is connected to the first end portion through bonding of glass glue 12; the first end portion is provided with a first glue stopping member 13, the first glue stopping member 13 is used for the function of stopping the glass glue 12 and covering gaps, thereby improving the lifespan of the whole structure.

In an optional embodiment, the second side surface is connected to the car roof 3 through bonding of glass glue 12; the can roof 3 is provided with a second glue stopping member 14. Similarly, the second glue stopping member 14 has the same function as that of the first glue stopping member 13, which is not repeated.

It should be noted that the connection manners between the first side surface or the second side surface and corresponding structures in the present application include but are not limited to the manner of bonding of the glass glue 12 mentioned above, and can also be fixed connection manners such as bolts or other viscous substances.

In an optional embodiment, the housing includes a second end portion that is opposite to the first end portion; the second end portion is connected to the car roof 3. That is, in this embodiment, the housing 1 is provided above the car roof 3 and connected to the car roof 3, the connection manners include fixed connection manners such as adhesion, screw connection, pin connection, etc.

In an optional embodiment, a sealing member 9 is provided at a connection position between the second end portion and the car roof 3. The sealing member 9 provides waterproof and seam covering functions, and further improve the lifespan of the whole structure.

In an optional embodiment, the connection member 2 includes a positioning pin 201; the car roof 3 is provided with a positioning hole 10 corresponding to the positioning pin 201, so as to facilitate accurate positioning and connection between the housing 1 and the car roof 3. Optionally, a sealing foam 15 is provided in a connection gap between the positioning pin 201 and the positioning hole 10, the sealing foam 15 provides a soundproof function.

In an optional embodiment, the connection member 2 includes a snap-fit member 202; the car roof 3 is provided with a snap-fit hole 11 corresponding to the snap-fit member 202, which has the advantage of easy assembly. Optionally, the housing 1 is provided with a snap-fit seat 103 matching with the snap-fit member 202, the snap-fit member 202 can be snap-fitted to the snap-fit seat 103 to improve firmness of the snap-fit member 202. Moreover, since the snap-fit member 202 is moveably snap-fitted to both the housing 1 and the car roof 3, flexibility of assembly is improved.

In another aspect, the present application further discloses a car roof 3 structure including the car roof 3 and the above roof decoration structure.

In an optional embodiment, from FIG. 4, it can be seen that the car roof 3 includes a first plate body 301 and a second plate body 302 connected to each other; the first plate body 301 and the second plate body 302 have preset heights; and the housing 1 is located at an outer side of the first plate body 301. That is, the car roof 3 is of a stepped shape with different heights, such that the housing 1 can be arranged at a plate body with a relatively low height, and thus an outer wall of the housing 1 is enabled to be flush with an edge of the second plate body 302. When viewed from outside, the car roof 3 and the roof decoration structure are an integral structure.

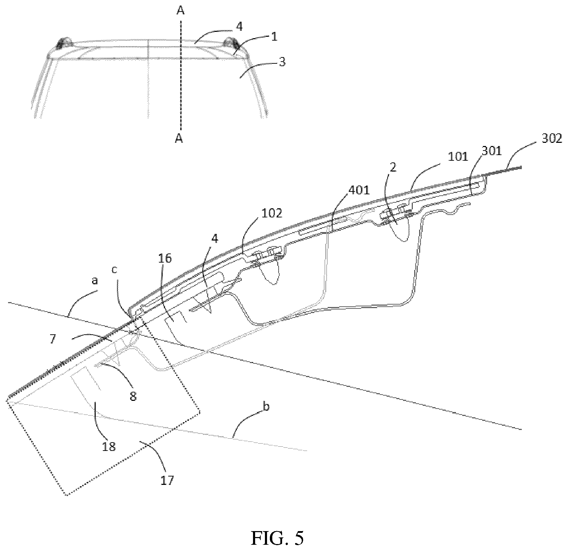

As shown in FIG. 5, FIG. 5 is a view of comparing a windshield and a roof mounting region in the prior art with a windshield and a roof mounting region in the present application. Referring to FIG. 2, a prior art car roof and windshield's mounting region structure 17 includes a prior art windshield 7, a prior art car roof 8, and a prior art ceiling 18; wherein the prior art windshield 7 is connected to the prior art car roof 8, and a connection position of the above two is located under a lower boundary c of a front edge of the car roof 3; the prior art ceiling 18 is located under the connection position of the two. From the above description, it can be known that a black edge of a windshield is used to cover a connection member and a sight line of a driver that can see a ceiling. In the prior art, a black edge region of a windshield is large, thus an angle of a view field line b is small.

However, in the car roof 3, the roof decoration structure, and the structure of the front windshield mounting region 5 of the present application, such as the part in the non-dashed box in FIG. 5, since the front windshield 4 is inserted in the front windshield mounting region 5, a connection position of the car roof 3 and the front windshield 4 is located above a lower boundary c of a front edge of the car roof 3, so that a decorative ceiling 16 can also be mounted above the lower boundary c of the front edge of the car roof 3, and thus a black edge region of glass under the lower boundary c of the front edge of the car roof 3 is relatively small. Therefore, an angle of a view field line a of the present application obviously increases relative to the angle of the view field line b in the prior art.

In another aspect, the present application further discloses an automobile, which includes the above car roof 3 structure.

Optionally, the roof decoration structure provided by the present application can be directly applied to vehicles with existing styling, it only needs to conduct local trimming for a part of the car roof 3 connected to the roof decoration structure, such that the housing 1 of the roof decoration structure is matched with and connected to the car roof 3. Optionally, a whole styling of the roof decoration structure matched with and connected to the car roof 3 is the same as the original styling having only the car roof 3, moreover, since the front windshield 4 is directly inserted in a region formed by the roof decoration structure and the car roof 3, the black edge of the front windshield 4 of the vehicle can be greatly reduced. The roof decoration structure provided by the present application can reduce a width of the black edge by 50-60mm, and increase a driving view field by about 5 degrees. That is, the roof decoration structure provided by the present application has advantages of a wide applied range, low cost, and effectively improving a driving field of view.

The above described are only optional embodiments of the present application and not intended to limit the present application. Any modification, equivalent replacement, improvement, and the like made within the spirit and principle of the present application should be included in the protection scope of the present application.

## Claims

1. A roof decoration structure comprising a housing (1) and a connection member (2); wherein the housing (1) is provided at an outer side of a car roof (3), and the housing (1) is connected to the car roof (3) through the connection member (2); the housing (1) comprises a first end portion, the first end portion and the car roof (3) form a front windshield mounting region (5); and one end of the front windshield (4) is provided in the front windshield mounting region (5).

2. The roof decoration structure according to claim 1, wherein the front windshield (4) comprises a first side surface and a second side surface that are opposite; the first side surface is connected with the first end portion; and the second side surface is connected with the car roof (3).

3. The roof decoration structure according to claim 2, wherein the first side surface is connected to the first end portion through bonding of glass glue (12); the first end portion is provided with a first glue stopping member (13).

4. The roof decoration structure according to claim 3, wherein, the second side surface is connected to the car roof (3) through bonding of glass glue (12); the car roof (3) is provided with a second glue stopping member (14).

5. The roof decoration structure according to claim 2, wherein the housing (1) comprises a second end portion that is opposite to the first end portion; the second end portion is connected to the car roof (3).

6. The roof decoration structure according to claim 5, wherein a sealing member (9) is provided at a connection position between the second end portion and the car roof (3).

7. The roof decoration structure according to claim 1, wherein the connection member (2) comprises a positioning pin (201); the car roof (3) is provided with a positioning hole (10) corresponding to the positioning pin (201).

8. The roof decoration structure according to claim 1, wherein the connection member (2) comprises a snap-fit member (202); the car roof (3) is provided with a snap-fit hole (11) corresponding to the snap-fit member (202).

9. The roof decoration structure according to claim 1, wherein the housing (1) comprises an outer casing (101) and an inner casing (102) connected to each other; the inner casing (102) is provided at an outer side of the car roof (3); the outer casing (101) is provided at an outer side of the inner casing (102), and the outer casing (101) comprises the first end portion.

10. A car roof structure comprising a car roof (3) and the roof decoration structure according to any one of claims 1-9.

11. The car roof structure according to claim 10, wherein the car roof (3) comprises a first plate body (301) and a second plate body (302) connected to each other; the first plate body (301) and the second plate body (302) have preset heights; and the housing (1) is located at an outer side of the first plate body (301).

12. A vehicle comprising the car roof structure according to claim 10 or 11.
